# EUROPEAN PATENT SPECIFICATION

(11) **EP 4 296 957 B1**
(45) Date of publication and mention of the grant of the patent: **24.09.2025**
(21) Application number: 22774942.1
(22) Date of filing: 01.03.2022
(51) Int. Cl.: G06T 13/40, G06T 19/00, G06F 3/04845

(54) **THREE-DIMENSIONAL MODEL GENERATION DEVICE, THREE-DIMENSIONAL MODEL GENERATION METHOD, AND PROGRAM**
VORRICHTUNG ZUR ERZEUGUNG DREIDIMENSIONALER MODELLE, VERFAHREN ZUR ERZEUGUNG DREIDIMENSIONALER MODELLE UND PROGRAMM
SYSTÈME DE GÉNÉRATION DE MODÈLE TRIDIMENSIONNEL, PROCÉDÉ DE GÉNÉRATION DE MODÈLE TRIDIMENSIONNEL ET PROGRAMME

(30) Priority: 23.03.2021 JP 2021048997
(43) Date of publication of application: 27.12.2023
(73) Proprietor: JVCKENWOOD Corporation, Yokohama-shi, Kanagawa 2210022 (JP)
(72) Inventor: NOGUCHI, Hiroshi, Yokohama-shi, Kanagawa 221-0022 (JP)
(74) Representative: Pritzlaff, Stefanie Lydia
(86) International application number: PCT/JP2022/008565
(87) International publication number: WO 2022/202145

(56) References cited:
- EP-A1- 3 573 026
- WO-A1-2018/135343
- JP-A- 2021 002 087
- JP-A- 2021 002 087
- BOULAY B ET AL: "Posture recognition with a 3D human model", IEE INTERNATIONAL SYMPOSIUM ON IMAGING FOR CRIME DETECTION AND PREVENTION (ICDP 2005), vol. 2005, 7 June 2005 (2005-06-07), pages 135 - 138, XP093176447, Retrieved from the Internet <URL:https://inria.hal.science/inria-00494244/document> DOI: 10.1049/ic:20050085
- MOBIDEV: "3D Human Pose Estimation in AI Fitness Coach Apps", 20 January 2021 (2021-01-20), XP093176449, Retrieved from the Internet <URL:https://web.archive.org/web/20210120023755/https://medium.com/swlh/3d-human-pose-estimation-in-ai-fitness-apps-670d93d453a9>

## Description

### Field

The present disclosure relates to a three-dimensional model generation device, a three-dimensional model generation method, and a program.

### Background

In recent years, meetings using a VR space by sharing a VR space that realizes virtual reality (VR) between a plurality of users have been increasing. In such a meeting, it is considered that avatars corresponding to the users are generated and participate in a VR space. A web meeting in which a plurality of users participate is held by the users from distant places via terminal devices and a network. In this case, an image of a self is captured with a camera, generates a three-dimensional image based on a two-dimensional captured image of the self, and causes the three-dimensional image of the self to participate in a VR space. Such three-dimensional model generation methods include, for example, one described in JP 2011 113421 A.

Further, reference is made to JP 2021 002 087 A relates to an information processing system, in particular a computer program for distributing a video including an animation of a character object generated on the basis of motion of a distributing user, which causes one or more computer processors to implement: an acquisition function of acquiring first avatar information including first part information regarding a first part of the character; an identification function of identifying second part information regarding a second part of the character not included in the first avatar information, on the basis of the first part information acquired by the acquisition function; and a generation function of generating second avatar information on the basis of the first part information acquired by the acquisition function and the second part information identified by the identification function. EP 3 573 026 A1 relates to an information processing apparatus having an acquisition unit; and a generation control unit. The acquisition unit uses cameras to acquire images of an object, and means for acquiring an importance level relating to at least one part of the object. A generation control unit controls, on the basis of the acquired importance level, generation of a model of the object displayed in a virtual space.

### Summary

When generating a three-dimensional image based on a two-dimensional image of a user that is captured with a camera, the user generates a three-dimensional image of the upper body of the user in general. In a communication space, such as a VR space, however, it is required to generate a three-dimensional image of the whole body of the user and participate in a meeting for sensation of presence in the space.

The present disclosure was made in view of the above-described circumstances and an object of the present disclosure is to make it possible to easily generate a three-dimensional model of a whole body for participation in a VR space.

To solve the above problem and achieve the object, a three-dimensional model generation device according to the present disclosure, a three-dimensional model generation method and a program as set forth in the appended claims are provided. The device inter alia includes: an upper-body model generation unit configured to generate an upper-body three-dimensional model based on captured-image information on an upper body of a subject that is acquired by an imaging device; and a lower-body model selection unit configured to select a lower-body three-dimensional model corresponding to the upper body of the subject from a plurality of lower-body three-dimensional models set previously, by analyzing an attribute of the subject based on the captured-image information.

A three-dimensional model generation method according to the present disclosure inter alia includes the steps of: generating an upper-body three-dimensional model based on captured-image information on an upper body of a subject that is acquired by an imaging device; and selecting a lower-body three-dimensional model corresponding to the upper body of the subject from a plurality of lower-body three-dimensional models set previously, by analyzing an attribute of the subject based on the captured-image information.

A program according to the present disclosure causes a computer that operates as a three-dimensional model generation device to inter alia execute the steps of: generating an upper-body three-dimensional model based on captured-image information on an upper body of a subject that is acquired by an imaging device; and selecting a lower-body three-dimensional model corresponding to the upper body of the subject from a plurality of lower-body three-dimensional models set previously, by analyzing an attribute of the subject based on the captured-image information.

According to the present disclosure, an effect that it is possible to easily generate a three-dimensional model of a whole body for participation in a VR space is enabled.

### Brief Description of Drawings

FIG. 1 is a block configuration diagram illustrating a three-dimensional model generation system according to a first embodiment.
FIG. 2 is an illustration illustrating examples of a male lower-body model in a lower-body model database.
FIG. 3 is an illustration illustrating examples of a female lower-body model in a lower-body model database.
FIG. 4 is an illustration illustrating an example of a method of generating a whole-body model.
FIG. 5 is a block configuration diagram illustrating a three-dimensional model generation system according to a second embodiment.
FIG. 6 is an illustration illustrating an example of lower-body three-dimensional motions in a lower-body three-dimensional motion database.
FIG. 7 is a block configuration diagram illustrating a three-dimensional model generation system according to a third embodiment.
FIG. 8 is an illustration illustrating examples of a posture of a lower-body model with respect to a proper posture of an upper-body model.
FIG. 9 is an illustration illustrating examples of the posture of the lower-body model with respect to a backward-leaning posture of the upper-body model.
FIG. 10 is an illustration illustrating an example of the posture of the lower-body model with respect to a forward-leaning posture of the upper-body model.
FIG. 11 is an illustration illustrating an example of the posture of the lower-body model with respect to a posture with a cheek resting on a hand of the upper-body model.

### Description of Embodiments

With reference to the accompanying drawings, embodiments of a three-dimensional model generation device, a three-dimensional model generation method, and a program according to the present disclosure will be described in detail below. The embodiments do not limit the invention.

### First Embodiment

### Three-Dimensional Model Generation System

In a first embodiment, a device that generates a three-dimensional model (avatar) of a plurality of users in a meeting where the users share a VR space that realizes virtual reality and a method will be described below. Note that the three-dimensional model generation device and the method are applicable not only to a meeting using a VR space but also to, for example, an exhibition, a fair, and a party.

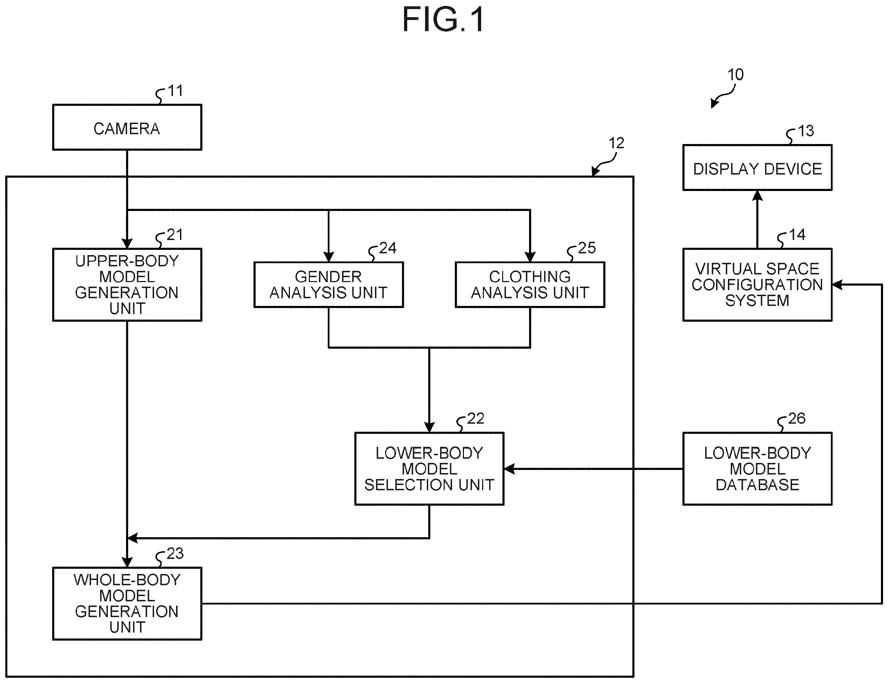

FIG. 1 is a block configuration diagram illustrating a three-dimensional model generation system according to the first embodiment.

In the first embodiment, as illustrated in FIG. 1, a three-dimensional model generation system 10 includes a camera (imaging device) 11, a three-dimensional model generation device 12, and a display device 13.

The camera 11 acquires captured-image information obtained by capturing an image of a user (subject). The camera 11 is capable of capturing an image of the upper body of a self who is the user. In this case, it is preferable that the camera 11 capture the upper body of the user from the head to at least the waist. The camera 11 transmits the captured-image information to the three-dimensional model generation device 12.

Based on the captured-image information obtained by the camera 11 by image capturing, the three-dimensional model generation device 12 generates a three-dimensional model of the whole body of the user. The three-dimensional model generation device 12 transmits the generated three-dimensional model of the whole body to a virtual space configuration system 14. The three-dimensional model generation device 12 includes, for example, an arithmetic circuit, such as a CPU (Central Processing Unit). A specific configuration of the three-dimensional model generation device 12 will be described below.

The virtual space configuration system 14 connects to personal computers (three-dimensional model generation devices 12) of a plurality of users via a network, such as the Internet. Based on the three-dimensional model of the whole body that is generated by the personal computers (the three-dimensional model generation devices 12) of the users, the virtual space configuration system 14 generates information on a VR space. The virtual space configuration system 14 outputs the generated information on the VR space to the display device 13. Note that the virtual space configuration system 14 is, for example, a server.

Based on the information on the VR space that is acquired from the virtual space configuration system 14, the display device 13 displays an image of the VR space that is viewed by the user himself/herself. The display device 13 is, for example, a HMD (Head Mount Display) or a liquid crystal display.

A plurality of lower-body three-dimensional models that are set previously are stored in a lower-body model database 26. The lower-body model database 26 outputs a given lower-body three-dimensional model to the three-dimensional model generation device 12 based on a request of the three-dimensional model generation device 12 and details thereof will be described below. The lower-body model database 26 is, for example, a server and includes at least an external storage memory device, such as a HDD (Hard Disk Drive), and a memory. Note that the virtual space configuration system 14 and the lower-body model database 26 may be configured integrally.

The three-dimensional model generation device 12 includes an upper-body model generation unit 21, a lower-body model selection unit 22, and a whole-body model generation unit 23. The three-dimensional model generation device 12 includes a gender analysis unit 24 and a clothing analysis unit 25. The lower-body model selection unit 22 is connected to the lower-body model database 26.

The upper-body model generation unit 21 generates an upper-body three-dimensional model based on captured-image information on the upper body of a user that is acquired by the camera 11 by image capturing. Specifically, the upper-body three-dimensional model is generated based on a two-dimensional model of the upper body of the user of which image is captured by the camera 11. It is preferable to use, for example, an existing technique, such as the light section method or the pattern projection method, as a method of generating an upper-body three-dimensional model.

The gender analysis unit 24 and the clothing analysis unit 25 analyze the attribute of the user. The attribute herein refers to the gender and clothing of the user; however, other may apply. The gender analysis unit 24 analyzes the gender of the user based on the captured-image information on the upper body of the user that is acquired by the camera 11 by image capturing and specifies whether the user is male or female. The clothing analysis unit 25 analyzes the clothing of the user based on the captured-image information on the upper body of the user that is acquired by the camera 11 by image capturing and specifies a type of the clothing. The analysis by the gender analysis unit 24 and the clothing analysis unit 25 is, for example, image analysis using AI (artificial intelligence), and machine learning, such as deep learning, may be used. Note that the analysis by the gender analysis unit 24 and the clothing analysis unit 25 is not limited to image analysis using AI and other analysis methods may be used.

The lower-body model selection unit 22 selects a lower-body three-dimensional model based on the result of the analysis by the gender analysis unit 24 and the clothing analysis unit 25. The lower-body three-dimensional models that are set previously are stored in the lower-body model database 26. Based on the gender of the user that is specified by the gender analysis unit 24 and the type of clothing that is specified by the clothing analysis unit 25, the lower-body model selection unit 22 selects a lower-body three-dimensional model in the gender and clothing that are the most appropriate to and that are the same as those of the gender and clothing of the user from the lower-body three-dimensional models that are stored in the lower-body model database 26.

The whole-body model generation unit 23 generates the whole-body three-dimensional model by synthesizing the three-dimensional model of the upper body of the user that is generated by the upper-body model generation unit 21 and the three-dimensional model of the lower body of the user that is selected by the lower-body model selection unit 22. Note that the lower-body model selection unit 22 has no color information and no texture information. For this reason, when synthesizing the three-dimensional model of the upper body of the user and the three-dimensional model of the lower body, the whole-body model generation unit 23 adds color information and texture information to the lower-body three-dimensional model according to color information and texture information in the upper-body three-dimensional model and generates the whole-body three-dimensional model.

### Three-dimensional Model Generation Method

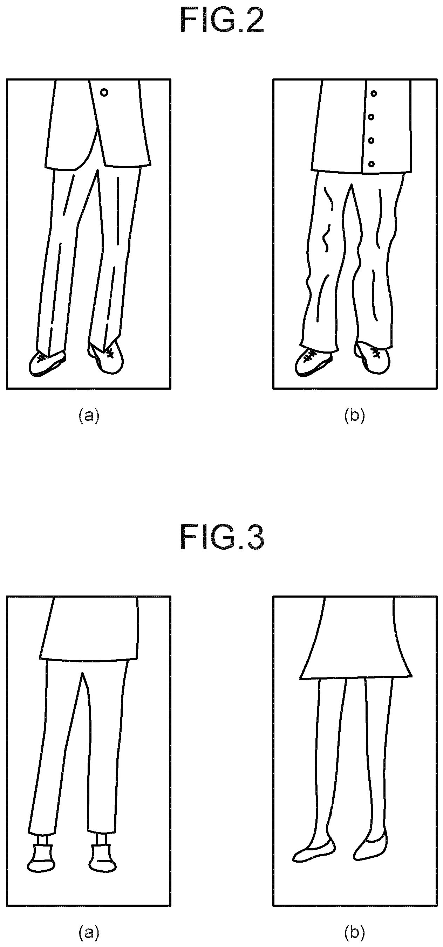

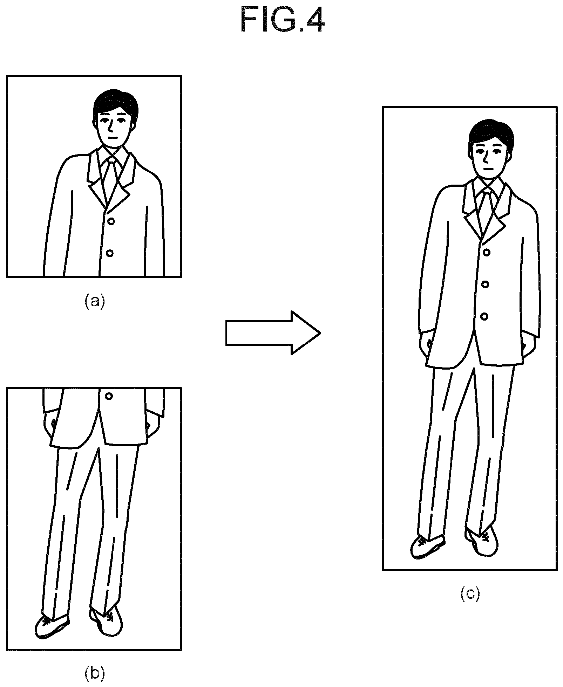

FIG. 2 is an illustration illustrating examples of a male lower-body model in the lower-body model database. FIG. 3 is an illustration illustrating examples of a female lower-body model in the lower-body model database. FIG. 4 is an illustration illustrating an example of a method of generating a whole-body model.

The three-dimensional model generation method of the first embodiment includes a step of generating an upper-body three-dimensional model based on captured-image information on the upper body of a user that is acquired by the camera 11 by image capturing, a step of selecting a lower-body three-dimensional model that is the most suitable to the upper body of the user from a plurality of lower-body three-dimensional models previously set, by analyzing an attribute of the user based on the captured-image information of the camera 11, and a step of generating a whole-body three dimensional model by synthesizing the upper-body three-dimensional model and the lower-body three-dimensional model.

As illustrated in FIG. 1, the upper-body model generation unit 21 generates an upper-body three-dimensional model based on captured-image information on the upper body of the user that is acquired by the camera 11 by image capturing. The gender analysis unit 24 analyzes the gender of the user based on the captured-image information on the upper body of the user and the clothing analysis unit 25 analyzes the clothing of the user based on the captured-image information on the upper body of the user. The lower-body model selection unit 22 selects a lower-body three-dimensional model that is the most appropriate based on the gender of the user that is analyzed by the gender analysis unit 24 and the type of clothing of the user that is analyzed by the clothing analysis unit 25.

As illustrated in FIG. 2, if the user is male, a plurality of lower-body three-dimensional models, such as (a) a suit pants style and (b) a button-shirt pants style, are stored in the lower-body model database 26. As illustrated in FIG. 3, if the user is female, a plurality of lower-body three-dimensional models, such as (a) a pants style and (b) a skirt style, are stored in the lower-body model database 26. Note that, for genders, three-dimensional models of not only males and females but also adult males and females and child females and males may be prepared or unisex lower-body three-dimensional models may be used.

As illustrated in FIG. 1, the whole-body model generation unit 23 synthesizes the three-dimensional model of the upper body of the user that is generated by the upper-body model generation unit 21 and the three-dimensional model of the lower body of the user that is selected by the lower-body model selection unit 22. As illustrated in FIGS. 1 to 4, once the upper-body model generation unit 21 generates a three-dimensional model (a) of an upper body in a suit jacket style, the lower-body model selection unit 22 selects a three-dimensional model (b) of a lower body in a suit pants style from the lower-body model database 26. In this case, the lower-body model selection unit 22 selects a lower-body three-dimensional model that is the most suitable to the three-dimensional model of the upper body of the user that is generated by the upper-body model generation unit 21. The most suitable lower-body three-dimensional model herein is a lower-body three-dimensional model that is similar to the upper-body three-dimensional model in gender and the type of clothing.

When synthesizing the upper-body three-dimensional model and the lower-body three-dimensional model, the whole-body model generation unit 23 adjusts the scale ratio of the lower-body three-dimensional model such that the waist size of the upper-body three-dimensional model and the waist size of the lower-body three-dimensional model are equal. The whole-body model generation unit 23 adjusts a joint position in a vertical direction in consideration of connection between the clothing of the upper-body three-dimensional model and the clothing of the lower-body three-dimensional model. The whole-body model generation unit 23 may adjust the joint position between the upper-body three-dimensional model and the lower-body three-dimensional model such that the generated whole-body three-dimensional model has an average height that is determined previously. Furthermore, the whole-body model generation unit 23 performs smoothing processing on the joint between the upper-body three-dimensional model and the lower-body three-dimensional model such that no feeling of strangeness is caused in the joint. When generating the whole-body three-dimensional model, the whole-body model generation unit 23 adds color and texture to the lower-body three-dimensional model in accordance with the color and texture of the clothing of the upper-body three-dimensional model.

### <Second Embodiment>

### [Three-dimensional Model Generation System]

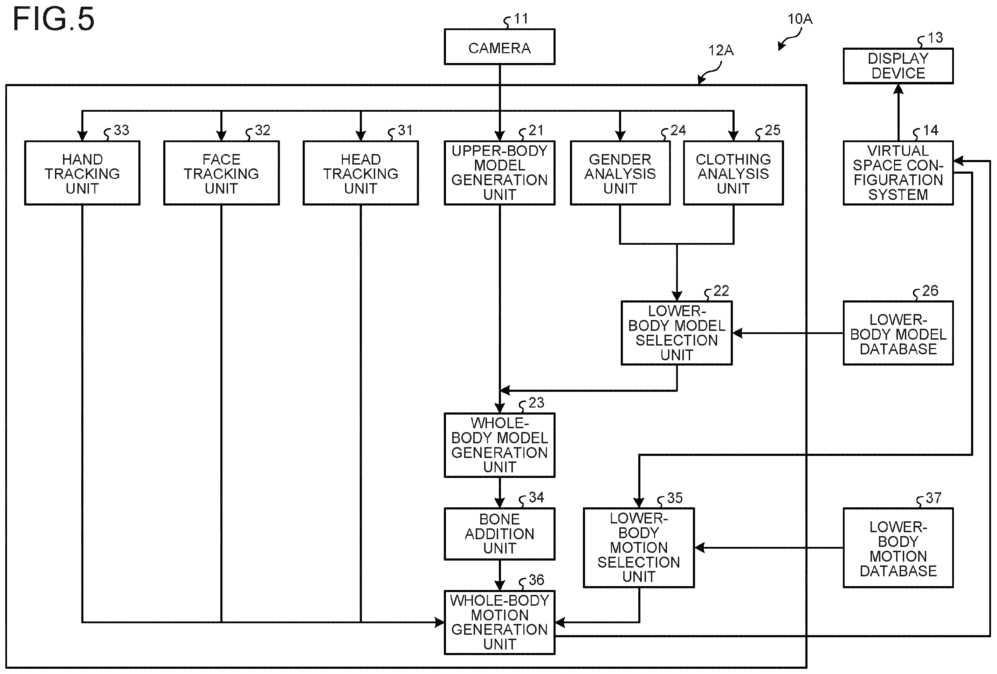

FIG. 5 is a block configuration diagram illustrating a three-dimensional model generation system according to a second embodiment.

In the second embodiment, as illustrated in FIG. 5, a three-dimensional model generation system 10A includes the camera 11, a three-dimensional model generation device 12A, and the display device 13. The camera 11 and the display device 13 herein are the same as those of the first embodiment and thus description thereof will be omitted.

A plurality of lower-body three-dimensional motions that are previously set are stored in a lower-body motion database 37. A three-dimensional motion refers to a motion of a three-dimensional model. The lower-body motion database 37 outputs a given lower-body three-dimensional model to the three-dimensional model generation device 12 based on a request of the three-dimensional model generation device 12 and details thereof will be described below. Note that the lower-body model database 26 is, for example, a server, or the like, and includes at least an external storage device, such as a HDD (Hard Disk Drive), and a memory. Note that the virtual space configuration system 14 and the lower-body model database 26 may be configured integrally.

The three-dimensional model generation device 12A generates a whole-body three-dimensional model of a user based on captured-image information obtained by the camera 11 by image capturing and generates a whole-body three-dimensional motion.

The three-dimensional model generation device 12A includes the upper-body model generation unit 21, the lower-body model selection unit 22, the whole-body model generation unit 23, the gender analysis unit 24, and the clothing analysis unit 25 and the lower-body model database 26 is connected to the lower-body model selection unit 22. The three-dimensional model generation device 12A includes a head tracking unit (an upper-body motion acquisition unit) 31, a face tracking unit (the upper-body motion acquisition unit) 32, a hand tracking unit (the upper-body motion acquisition unit) 33, a bone addition unit 34, a lower-body motion selection unit 35, and a whole-body motion generation unit 36. The lower-body motion selection unit 35 is connected to the lower-body motion database 37.

The upper-body model generation unit 21, the lower-body model selection unit 22, the whole-body model generation unit 23, the gender analysis unit 24, the clothing analysis unit 25, and the lower-body model database 26 are the same as those of the first embodiment and thus description thereof will be omitted.

The head tracking unit 31 acquires a three-dimensional motion of the head of the user by tracking a position of the head of the user based on captured-image information on the upper body of the user that is acquired by the camera 11 by image capturing. The face tracking unit 32 acquires a three-dimensional motion of the face of the user by tracking the expression of the face of the user based on the captured-image information on the upper body of the user that is acquired by the camera 11 by image capturing. The hand tracking unit 33 acquires three-dimensional motions of the hands of the user by tracking the position of the hands of the user based on the captured-image information on the upper body of the user that is acquired by the camera 11 by image capturing. Analysis by the head tracking unit 31, the face tracking unit 32, and the hand tracking unit 33 is, for example, image analysis using AI; however, other analysis methods may be used.

The bone addition unit 34 adds joint information on the user to a three-dimensional model of the whole body of the user that is generated by the whole-body model generation unit 23. It is preferable that the joint information of the user be set previously according to the user.

The lower-body motion selection unit 35 selects a lower-body three-dimensional motion that is the most appropriate according to VR-space situation information that is acquired from the virtual space configuration system 14. The VR-space situation information is information indicating a situation of a VR space. The VR-space situation information is, for example, information in which a meeting is set and is information indicating a situation in which a three-dimensional model sits. Based on the VR-space situation information, the lower-body motion selection unit 35 selects a lower-body three-dimensional motion that is the most appropriate to the VR-space situation information from a plurality of lower-body three-dimensional motions that are stored in the lower-body motion database 37.

The whole-body motion generation unit 36 generates a whole-body three-dimensional motion by synthesizing, with the three-dimensional model of the whole body of the user that is generated by the whole-body model generation unit 23 and to which the joint information is added by the bone addition unit 34, the three-dimensional motion of the head of the user that is acquired by the head tracking unit 31, the three-dimensional motion of the face of the user that is acquired by the face tracking unit 32, the three-dimensional motions of the hands of the user that are acquired by the hand tracking unit 33, and the lower-body three-dimensional motion that is selected by the lower-body motion selection unit 35.

Once the three-dimensional model generation device 12A generates the three-dimensional model of the whole body of the user and the whole-body three-dimensional motion, the three-dimensional model generation device 12A outputs the whole-body three-dimensional model and the whole-body three-dimensional motion that are generated to the virtual space configuration system 14. The three-dimensional model generation system 10 generates a VR space based on the three-dimensional model of the whole body of the user that is connected and the three-dimensional motion of the whole body. The display device 13 displays an image of the VR space viewed from the user himself/herself based on information on the VR space that is generated by the virtual space configuration system 14.

### Three-Dimensional Model Generation Method

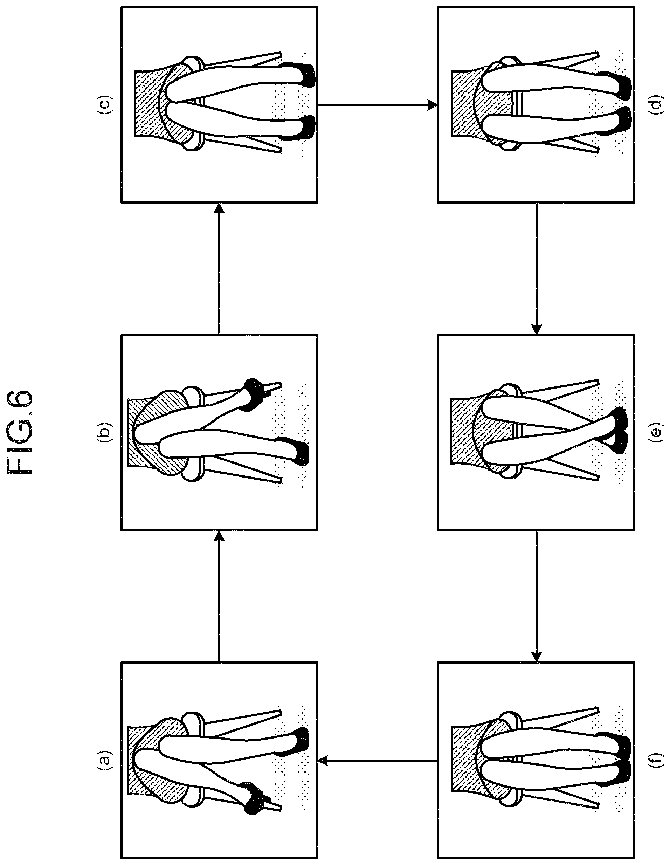

FIG. 6 is an illustration illustrating an example of lower-body three-dimensional motions in the lower-body three-dimensional motion database.

As illustrated in FIG. 5, the upper-body model generation unit 21 generates an upper-body three-dimensional model based on captured-image information on the upper body of a user that is acquired by the camera 11 by image capturing. The gender analysis unit 24 analyzes the gender of the user based on the captured-image information on the upper-body of the user and the clothing analysis unit 25 analyzes the clothing of the user based on the captured-image information on the upper body of the user. The lower-body model selection unit 22 selects a lower-body three-dimensional model that is the most appropriate based on the gender of the user that is analyzed by the gender analysis unit 24 and the type of clothing of the user that is analyzed by the clothing analysis unit 25. The whole-body model generation unit 23 generates a whole-body three-dimensional model by synthesizing the three-dimensional model of the upper body of the user that is generated by the upper-body model generation unit 21 and the three-dimensional model of the lower body of the user that is selected by the lower-body model selection unit 22. The bone addition unit 34 then adds joint information on the user to the three-dimensional model of the whole body of the user that is generated by the whole-body model generation unit 23.

The lower-body motion selection unit 35 selects a lower-body three-dimensional motion that matches the VR-space situation information from the lower-body motion database 37. The lower-body three-dimensional motion that matches the VR-space situation information is, for example, a lower-body three-dimensional motion corresponding to a posture of the user (a standing posture or a sitting posture) in the VR space. For example, as illustrated in FIG. 6, when the user is in the standing posture, the lower-body three-dimensional motion is a motion of repeating (a) a posture with the left leg crossed, (b) a posture with the right leg crossed, (c) a posture with the knees put together, (d) a posture with the knees open, (e) a posture with the feet crossed, and (f) a posture with the feet aligned. When the user is in the standing posture, similarly, a lower-body three-dimensional motion may be configured by combining the posture with the feet crossed, a posture with the feet closed, and the posture with the feet open. Note that the number of postures of which the lower-body three-dimensional motion consists is not limited to six.

The whole-body motion generation unit 36 generates a whole-body three-dimensional motion by synthesizing a three-dimensional motion of the head, a three-dimensional motion of the face, and three-dimensional motions of the hands with the three-dimensional model of the whole body of the user and synthesizing the lower-body three-dimensional motion with the three-dimensional model of the whole body of the user.

### Third Embodiment

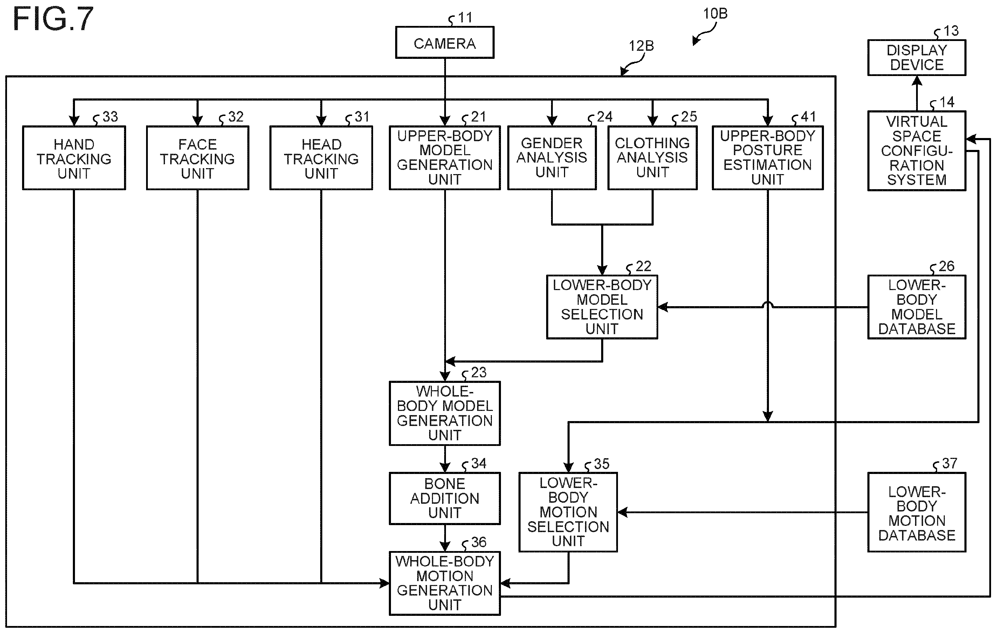

FIG. 7 is a block configuration diagram illustrating a three-dimensional model generation system according to a third embodiment.

In the third embodiment, as illustrated in FIG. 7, a three-dimensional model generation system 10B includes the camera 11, a three-dimensional model generation device 12B, and the display device 13. The camera 11 and the display device 13 herein are the same as those of the first embodiment and thus description thereof will be omitted.

The three-dimensional model generation device 12B generates a whole-body three-dimensional model of a user based on captured-image information obtained by the camera 11 by image capturing and generates a whole-body three-dimensional motion.

The three-dimensional model generation device 12B includes the upper-body model generation unit 21, the lower-body model selection unit 22, the whole-body model generation unit 23, the gender analysis unit 24, and the clothing analysis unit 25 and the lower-body model database 26 is connected to the lower-body model selection unit 22. The three-dimensional model generation device 12B includes the head tracking unit 31, the face tracking unit 32, the hand tracking unit 33, the bone addition unit 34, the lower-body motion selection unit 35, and the whole-body motion generation unit 36. The lower-body motion selection unit 35 is connected to the lower-body motion database 37. The three-dimensional model generation device 12B further includes an upper-body posture estimation unit 41.

The upper-body model generation unit 21, the lower-body model selection unit 22, the whole-body model generation unit 23, the gender analysis unit 24, the clothing analysis unit 25, and the lower-body model database 26 are the same as those of the first embodiment and thus description thereof will be omitted. The head tracking unit 31, the face tracking unit 32, the hand tracking unit 33, and the bone addition unit 34 are the same as those of the second embodiment and thus description thereof will be omitted.

The upper-body posture estimation unit 41 estimates a state of a user by analyzing a posture of the upper body of the user based on the captured-image information on the upper body of the user that is acquired by the camera 11 by image capturing. The upper-body posture estimation unit 41, for example, specifies a proper posture, a forward-leaning posture, a backward-leaning posture, or the like, of the user. The analysis by the upper-body posture estimation unit 41 is, for example, image analysis using AI; however, other analysis methods may be used.

The lower-body motion selection unit 35 selects a lower-body three-dimensional motion that is the most appropriate according to VR-space situation information that is acquired from the virtual space configuration system 14 and the state of the posture of the upper body of the user that is estimated by the upper-body posture estimation unit 41. The whole-body motion generation unit 36 generates a whole-body three-dimensional motion by synthesizing a three-dimensional motion of the head of the user, a three-dimensional motion of the face of the user, three-dimensional motions of the hands of the user with the three-dimensional model of the whole body of the user, and the three-dimensional motion of the lower body of the user with the three-dimensional model of the whole body of the user.

Once the three-dimensional model generation device 12A generates the three-dimensional model of the whole body of the user and the whole-body three-dimensional motion, the three-dimensional model generation device 12A outputs the whole-body three-dimensional model and the whole-body three-dimensional motion that are generated to the virtual space configuration system 14. The three-dimensional model generation system 10 generates a VR space based on the three-dimensional model of the whole body of the user that is connected and the three-dimensional motion of the whole body. The display device 13 displays an image of the VR space viewed from the user himself/herself based on information on the VR space that is generated by the virtual space configuration system 14.

### Three-Dimensional Model Generation Method

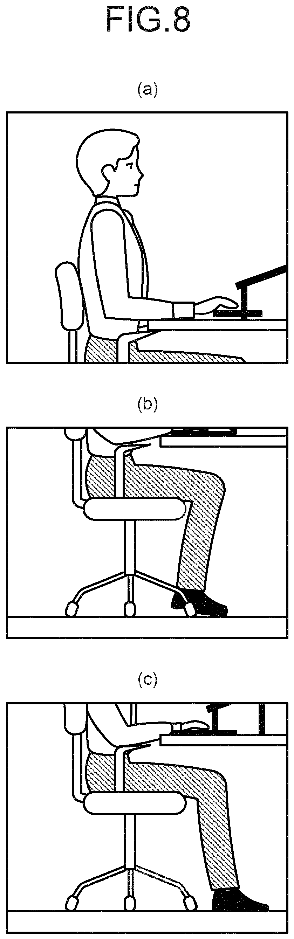

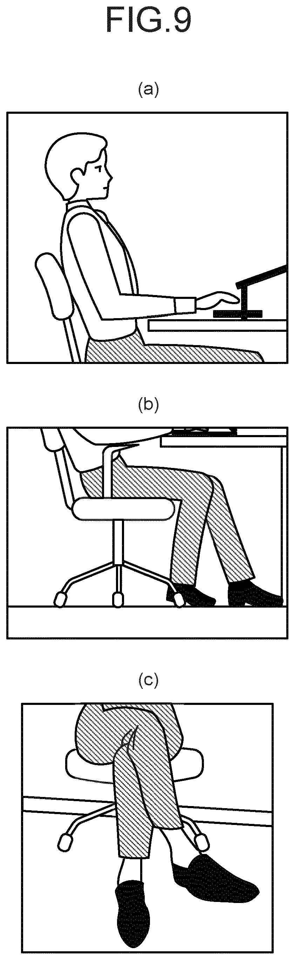

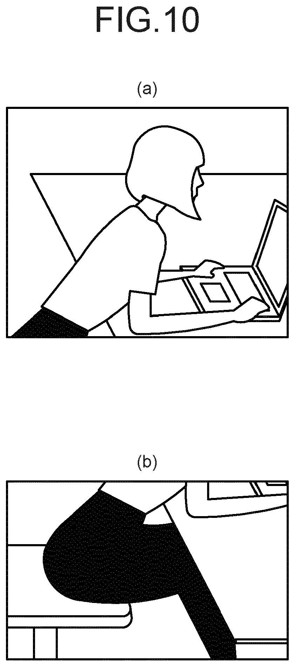

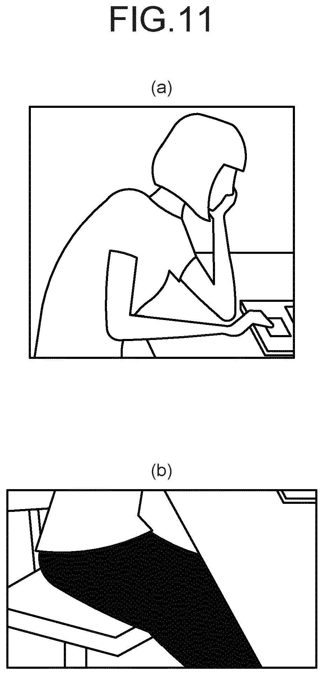

FIG. 8 is an illustration illustrating examples of a posture of a lower-body model with respect to a proper posture of an upper-body model. FIG. 9 is an illustration illustrating examples of the posture of the lower-body model with respect to the backward-leaning posture of the upper-body model. FIG. 10 is an illustration illustrating an example of the posture of the lower-body model with respect to a forward-leaning posture of the upper-body model. FIG. 11 is an illustration illustrating an example of the posture of the lower-body model with respect to a posture with a cheek resting on a hand of the upper-body model.

As illustrated in FIG. 7, the upper-body model generation unit 21 generates an upper-body three-dimensional model based on captured-image information on the upper body of a user that is acquired by the camera 11 by image capturing. The gender analysis unit 24 analyzes the gender of the user based on the captured-image information on the upper-body of the user and the clothing analysis unit 25 analyzes the clothing of the user based on the captured-image information on the upper body of the user. The lower-body model selection unit 22 selects a lower-body three-dimensional model that is the most appropriate based on the gender of the user that is analyzed by the gender analysis unit 24 and the type of clothing of the user that is analyzed by the clothing analysis unit 25. The whole-body model generation unit 23 generates a whole-body three-dimensional model by synthesizing the three-dimensional model of the upper body of the user that is generated by the upper-body model generation unit 21 and the three-dimensional model of the lower body of the user that is selected by the lower-body model selection unit 22. The bone addition unit 34 then adds joint information on the user to the three-dimensional model of the whole body of the user that is generated by the whole-body model generation unit 23.

The upper-body posture estimation unit 41 by estimates a state of the user by analyzing a posture of the upper body of the user based on the captured-image information on the upper body of the user that is acquired by the camera 11 by image capturing. As illustrated in FIG. 8, when the upper body of the user is in a proper posture (a), the upper-body posture estimation unit 41 selects lower-body three-dimensional motions (b) and (c) corresponding to the proper posture (a). As illustrated in FIG. 9, when the upper body of the user is in a backward-leaning posture (a), the upper-body posture estimation unit 41 selects lower-body three-dimensional motions (b) and (c) corresponding to the backward-leaning posture (a). As illustrated in FIG. 10, when the upper body of the user is in a forward-leaning posture (a), the upper-body posture estimation unit 41 selects a lower-body three-dimensional motion (b) corresponding to the forward-leaning posture (a). As illustrated in FIG. 11, when the upper body of the user is in a posture with a cheek resting on a hand (a), the upper-body posture estimation unit 41 selects a lower-body three-dimensional motion (b) corresponding to the posture with a cheek resting on a hand (a). Note that, as for the number of postures of which the lower-body three-dimensional motion consists, one or a plurality of postures are set.

The whole-body motion generation unit 36 generates a whole-body three-dimensional motion by synthesizing a three-dimensional motion of the head, a three-dimensional motion of the face, and three-dimensional motions of the hands with the three-dimensional model of the whole body of the user and synthesizing the lower-body three-dimensional motion with the three-dimensional model of the whole body of the user.

### Function and Effects of Embodiments

The embodiments include the upper-body model generation unit 21 that generates an upper-body three-dimensional model based on captured-image information on an upper body of a user (subject) that is acquired by the camera (imaging device) 11 and the lower-body model selection unit 22 selects a lower-body three-dimensional model corresponding to the upper body of the user from a plurality of lower-body three-dimensional models set previously, by analyzing an attribute of the user based on the captured-image information.

For this reason, the lower-body three-dimensional model corresponding to the upper-body three-dimensional model that is generated based on the captured-image information on the upper body of the user is selected. It is thus possible to easily generate a whole-body three-dimensional model for participation in a VR space.

The embodiments include the lower-body motion selection unit 35 that selects a motion of the lower-body three-dimensional model that is selected according to information indicating a situation of a virtual space. For this reason, a three-dimensional model of the whole body of the user is generated and a lower-body three-dimensional motion is generated and a lower-body three-dimensional motion is generated, which enables sensation of presence in a communication space, such as a VR space.

The embodiment includes the upper-body posture estimation unit 41 that estimates a state of the user by analyzing a posture of the upper body of the user based on the captured-image information, and the lower-body motion selection unit 35 selects the motion of the lower-body three-dimensional model based on the information indicating the situation of the virtual space and the posture of the upper body that is estimated by the upper-body posture estimation unit 41. Thus, it is possible to increase relevance between an upper-body three-dimensional motion and the lower-body three-dimensional motion.

The three-dimensional model generation devices 12, 12A and 12B according to the present disclosure have been described, and they may be implemented in various different modes other than the above-described embodiments.

Each component of the three-dimensional model generation devices 12, 12A and 12B illustrated in the drawings is a functional idea and need not necessarily be configured physically as illustrated in the drawings. In other words, specific modes of each device are not limited to those illustrated in the drawings and all or part of the device may be functionally or physically distributed or integrated in any unit according to the processing load and usage of each device.

The configurations of the three-dimensional model generation devices 12, 12A AND 12B, for example, are implemented by a program that is loaded into a memory as software, or the like. In the above-described embodiment, they have been described as functional blocks that are realized by cooperation of hardware or software thereof. In other words, these functional blocks can be realized in various forms by only hardware, only software or a combination of hardware and software.

The above-described components include one that is assumable easily by those skilled in the art and one substantially the same. Furthermore, combinations can be made as appropriate in the above-described configuration. Furthermore, various omissions, replacements and changes in the configuration can be made within the scope of the invention.

The three-dimensional model generation device, the three-dimensional model generation method, and the program of the present disclosure are, for example, applicable to a meeting using a VR space.

### Reference Signs List

10, 10A, 10B Three-dimensional model generation system
11 Camera (imaging device)
12, 12A, 12B Three-dimensional model generation device
13 Display device
21 Upper-body model generation unit
22 Lower-body model selection unit
23 Whole-body model generation unit
24 Gender analysis unit
25 Clothing analysis unit
26 Lower-body model database
31 Head tracking unit (upper-body motion acquisition unit)
32 Face tracking unit (upper-body motion acquisition unit)
33 Hand tracking unit (upper-body motion acquisition unit)
34 Bone addition unit
35 Lower-body motion selection unit
36 Whole-body motion generation unit
37 Lower-body motion database
41 Upper-body posture estimation unit

## Claims

1. A three-dimensional model generation device (12; 12A; 12B) comprising:
an upper-body model generation unit (21) configured to generate an upper-body three-dimensional model based on captured-image information on an upper body of a subject that is acquired by an imaging device (11);
a gender analysis unit (24) configured to analyze gender of the subject based on the captured-image information;
a clothing analysis unit (25) configured to analyze clothing of the subject based on the captured-image information; and
a lower-body model selection unit (22) configured to select, based on the gender of the subject identified by the gender analysis unit (24) and the type of clothing of the subject identified by the clothing analysis unit (25), a lower-body three-dimensional model corresponding to the upper body of the subject from a plurality of lower-body three-dimensional models set previously.

2. The three-dimensional model generation device (12A) according to claim 1, comprising a lower-body motion selection unit (35) configured to select a motion of the selected lower-body three-dimensional model according to information indicating a situation of a virtual space.

3. The three-dimensional model generation device (12B) according to claim 2, comprising:
an upper-body posture estimation unit (41) configured to estimate a state of the subject by analyzing a posture of the upper body of the subject based on the captured-image information,
wherein the lower-body motion selection unit (35) is configured to select the motion of the lower-body three-dimensional model based on the information indicating the situation of the virtual space and the posture of the upper body that is estimated by the upper-body posture estimation unit (41).

4. A three-dimensional model generation method comprising the steps of:
generating an upper-body three-dimensional model based on captured-image information on an upper body of a subject that is acquired by an imaging device (11);
analyzing gender of the subject based on the captured-image information;
analyzing clothing of the subject based on the captured-image information; and
selecting, based on the identified gender and the identified type of clothing of the subject, a lower-body three-dimensional model corresponding to the upper body of the subject from a plurality of lower-body three-dimensional models set previously.

5. A program comprising instructions which, when the program is executed by a computer, cause the computer that operates as a three-dimensional model generation device to execute the steps of:
generating an upper-body three-dimensional model based on captured-image information on an upper body of a subject that is acquired by an imaging device (11);
analyzing gender of the subject based on the captured-image information;
analyzing clothing of the subject based on the captured-image information; and
selecting, based on the identified gender and the identified type of clothing of the subject, a lower-body three-dimensional model corresponding to the upper body of the subject from a plurality of lower-body three-dimensional models set previously.

## Patentansprüche

1. Vorrichtung zum Erzeugen eines dreidimensionalen Modells (12; 12A; 12B), aufweisend:
eine Oberkörpermodell-Erzeugungseinheit (21), die konfiguriert ist zum Erzeugen eines dreidimensionalen Oberkörpermodells basierend auf von einer Bildgebungsvorrichtung (11) erfassten Bildinformationen eines Oberkörpers eines Subjekts;
eine Geschlechts-Analyseeinheit (24), die konfiguriert ist zum Analysieren des Geschlechts des Subjekts basierend auf den erfassten Bildinformationen;
eine Kleidungs-Analyseeinheit (25), die konfiguriert ist zum Analysieren der Kleidung der Person basierend auf den erfassten Bildinformationen; und
eine Unterkörpermodell-Auswahleinheit (22), die konfiguriert ist zum Auswählen, basierend auf dem Geschlecht des Subjekts, das durch die Geschlechts-Analyseeinheit (24) identifiziert wurde, und der Art der Kleidung des Subjekts, die durch die Kleidungs-Analyseeinheit (25) identifiziert wurde, eines dreidimensionalen Unterkörpermodells, das dem Oberkörper des Subjekts entspricht, aus einer Vielzahl von dreidimensionalen Unterkörpermodellen, die zuvor festgelegt wurden.

2. Vorrichtung (12A) zum Erzeugen eines dreidimensionalen Modells nach Anspruch 1, die eine Unterkörper-Bewegungs-Auswahleinheit (35), die konfiguriert ist zum Auswählen einer Bewegung des ausgewählten dreidimensionalen Unterkörpermodells gemäß Informationen, die eine Situation eines virtuellen Raums angeben.

3. Vorrichtung (12B) zum Erzeugen eines dreidimensionalen Modells nach Anspruch 2, aufweisend:
eine Oberkörper-Haltungs-Schätzeinheit (41), die konfiguriert ist zum Schätzen eines Zustands des Subjekts durch Analysieren einer Haltung des Oberkörpers des Subjekts basierend auf den erfassten Bildinformationen,
wobei die Unterkörper-Bewegungs-Auswahleinheit (35) konfiguriert ist zum Auswählen der Bewegung des dreidimensionalen Unterkörpermodells basierend auf der Information, die die Situation des virtuellen Raums und die Haltung des Oberkörpers angeben, die von der Oberkörper-Haltungs-Schätzeinheit (41) geschätzt wurde.

4. Ein Verfahren zum Erzeugen eines dreidimensionalen Modells, das die folgenden Schritte umfasst:
Erzeugen eines dreidimensionalen Oberkörpermodells basierend auf Bildinformationen über den Oberkörper einer Person, die von einer Bildgebungsvorrichtung (11) erfasst wurden;
Analysieren des Geschlechts des Subjekts basierend auf den erfassten Bildinformationen;
Analysieren der Kleidung des Subjekts basierend auf den aufgenommenen Bildinformationen; und
Auswählen, basierend auf dem identifizierten Geschlecht und der identifizierten Art der Kleidung des Subjekts, eines dreidimensionalen Unterkörpermodells, das dem Oberkörper des Subjekts entspricht, aus einer Vielzahl von dreidimensionalen Unterkörpermodellen, die zuvor festgelegt wurden.

5. Ein Programm mit Anweisungen, die, wenn das Programm von einem Computer ausgeführt wird, den Computer, der als dreidimensionales Modellerzeugungsgerät arbeitet, dazu veranlassen, die folgenden Schritte auszuführen:
Erzeugen eines dreidimensionalen Oberkörpermodells basierend auf Bildinformationen über den Oberkörper eines Subjekts, die von einer Bildgebungsvorrichtung (11) erfasst wurden;
Analysieren des Geschlechts des Subjekts basierend auf den erfassten Bildinformationen;
Analysieren der Kleidung des Subjekts basierend auf den aufgenommenen Bildinformationen; und
Auswählen, basierend auf dem identifizierten Geschlecht und der identifizierten Art der Kleidung des Subjekts, eines dreidimensionalen Unterkörpermodells, das dem Oberkörper des Subjekts entspricht, aus einer Vielzahl von dreidimensionalen Unterkörpermodellen, die zuvor festgelegt wurden.

## Revendications

1. Dispositif de génération de modèles tridimensionnels (12 ; 12A ; 12B) comprenant :
une unité de génération de modèle du haut du corps (21) configurée pour générer un modèle tridimensionnel du haut du corps sur la base d'informations d'images capturées sur le haut du corps d'un sujet qui sont acquises par un dispositif d'imagerie (11) ;
une unité d'analyse de genre (24) configurée pour analyser le genre du sujet sur la base des informations d'images capturées ;
une unité d'analyse d'habillage (25) configurée pour analyser l'habillage du sujet sur la base des informations d'images capturées ; et
une unité de sélection de modèle de partie inférieure du corps (22) configurée pour sélectionner, sur la base du genre du sujet identifié par l'unité d'analyse de genre (24) et le type d'habillage du sujet identifié par l'unité d'analyse d'habillage (25), un modèle tridimensionnel de partie inférieure du corps correspondant à la partie supérieure du corps du sujet parmi une pluralité de modèles tridimensionnels de partie inférieure du corps définis précédemment.

2. Dispositif de génération de modèles tridimensionnels (12A) selon la revendication 1, comprenant une unité de sélection de mouvement du bas du corps (35) configurée pour sélectionner un mouvement du modèle tridimensionnel du bas du corps sélectionné en fonction d'informations indiquant une situation d'un espace virtuel.

3. Dispositif de génération de modèles tridimensionnels (12B) selon la revendication 2, comprenant :
une unité d'estimation de la posture du haut du corps (41) configurée pour estimer un état du sujet en analysant une posture du haut du corps du sujet sur la base des informations d'images capturées,
dans lequel l'unité de sélection de mouvement du bas du corps (35) est configurée pour sélectionner le mouvement du modèle tridimensionnel du bas du corps sur la base des informations indiquant la situation de l'espace virtuel et la posture du haut du corps qui est estimée par l'unité d'estimation de la posture du haut du corps (41).

4. Procédé de génération d'un modèle tridimensionnel comprenant les étapes suivantes :
la génération d'un modèle tridimensionnel du haut du corps basé sur des informations d'images capturées sur le haut du corps d'un sujet qui sont acquises par un dispositif d'imagerie (11) ;
l'analyse du genre du sujet sur la base des informations d'images capturées ;
l'analyse de l'habillage du sujet sur la base des informations d'images capturées ; et
la sélection, sur la base du genre identifié et du type identifié de l'habillage du sujet, d'un modèle tridimensionnel de partie inférieure du corps correspondant à la partie supérieure du corps du sujet parmi une pluralité de modèles tridimensionnels de partie inférieure du corps définis précédemment.

5. Programme comprenant des instructions qui, lorsque le programme est exécuté par un ordinateur, amènent l'ordinateur qui fonctionne comme un dispositif de génération de modèles tridimensionnels à exécuter les étapes suivantes :
la génération d'un modèle tridimensionnel du haut du corps basé sur des informations d'images capturées sur le haut du corps d'un sujet qui sont acquises par un dispositif d'imagerie (11) ;
l'analyse du genre du sujet sur la base des informations d'images capturées ;
l'analyse de l'habillage du sujet sur la base des informations d'images capturées ; et
la sélection, sur la base du genre identifié et du type identifié de l'habillage du sujet, d'un modèle tridimensionnel de partie inférieure du corps correspondant à la partie supérieure du corps du sujet parmi une pluralité de modèles tridimensionnels de partie inférieure du corps définis précédemment.
